# EUROPEAN PATENT APPLICATION

(11) **EP 3 709 199 A1**
(43) Date of publication of application: **16.09.2020**
(21) Application number: 18895559.5
(22) Date of filing: 25.12.2018
(51) Int. Cl.: G06F 21/54

(54) **CONTAINER SECURITY POLICY HANDLING METHOD AND RELATED DEVICE**

(30) Priority: 29.12.2017 CN 201711472539
(71) Applicant: Huawei Technologies Co., Ltd., Longgang District Shenzhen Guangdong 518129 (CN)
(72) Inventor: ZHANG, Xiangfeng, Shenzhen, Guangdong 518129 (CN); XIONG, Wei, Shenzhen, Guangdong 518129 (CN)
(74) Representative: MERH-IP Matias Erny Reichl Hoffmann Patentanwälte PartG mbB
(86) International application number: PCT/CN2018/123473
(87) International publication number: WO 2019/128984

(57) **Abstract**

This application provides a processing method, processing apparatus, and processing system for a container security policy. The processing method includes: publishing a container image, a security policy associated with the container image, and index information of the security policy to a container repository (S410); storing, by the container repository, the container image, and storing the security policy based on the index information; obtaining the container image from the container repository (S430); obtaining the security policy based on the container image (S440); starting a container based on the container image (S450); and running the container according to the security policy (S460). The processing method, processing apparatus, and processing system for a container security policy help improve security during container running.

## Description

This application claims priority to Chinese Patent Application No. 201711472539.7, filed with the China Patent Office on December 29, 2017 and entitled "PROCESSING METHOD FOR CONTAINER SECURITY POLICY AND RELATED APPARATUS", which is incorporated herein by reference in its entirety.

### TECHNICAL FIELD

This application relates to the container field, and more specifically, to a processing method and processing system for a container security policy, a computer, and a computer-readable storage medium.

### BACKGROUND

Containers share a kernel with a host machine. As a result, a vulnerability to the kernel of the host machine poses a threat on all container processes on the host machine, and a container process may also attack the host machine and another container by using the shared kernel.

Currently, container security is mainly enhanced by implementing a specific security policy to restrict a range of access resources and a behavior type of a container process.

For example, in the docker container technology, a requester starting a container specifies some security options when the container is started, and a container engine then implements a security policy including these security options. For another example, in the rkt container technology, a container security policy also temporarily includes some options.

In the prior art, these security options included in the security policy are usually configured in a container engine in advance. When the container engine runs a container, if no security option corresponding to a behavior of the container is configured in the container engine, a comparatively severe security risk exists during container running.

### SUMMARY

This application provides a processing method for a container security policy and related apparatus, to help improve security during container running.

According to a first aspect, this application provides a processing method for a container security policy. In the method, an original container image is associated with a security policy corresponding to the original container image, to obtain a container image, so that when the container image is loaded, the security policy corresponding to the container image can be forcibly loaded. Therefore, a container started by the container image can be run according to the security policy.

The security policy corresponding to the original container image or the container image may be determined based on a running behavior of the original container image.

In an implementation, a first computer embeds the security policy into a root file system of the original container image, to obtain the container image. The first computer publishes the container image to a container repository; a second computer obtains the container image, where the root file system of the container image includes the security policy; the second computer starts the container based on the container image; and the second computer runs the container according to the security policy.

In this implementation, because the root file system of the container image includes the security policy, to be specific, a fixed association relationship has been established between the container image and the security policy, the corresponding security policy can be forcibly implemented when the container is started. This can ensure container security and consistency between container process behaviors.

In addition, compared with that the security policy is included in metadata of the container image, in the implementation in which the security policy is included in the root file system, a definition of the metadata does not need to be modified. This can ensure compatibility between the container image and the standard.

In an implementation, the first computer embeds index information of the security policy into the original container image, to obtain the container image; the first computer publishes the container image, the security policy, and the index information of the security policy to the container repository; the second computer obtains the container image; the second computer determines the index information of the security policy based on the container image; the second computer obtains the security policy based on the index information; the second computer starts the container based on the container image; and the second computer runs the container according to the security policy.

In the processing method, the index information of the security policy corresponding to the container image is embedded into the container image, so that a fixed association relationship can be established between the container image and the security policy, and the corresponding security policy can be forcibly implemented when the container is started. This can ensure container security and consistency between container process behaviors.

In a specific implementation manner of this implementation, the first computer embeds the index information of the security policy into the root file system or the metadata of the original container image, to obtain the container image. Correspondingly, the second computer obtains the index information of the security policy from the root file system or the metadata of the container image.

The index information of the security policy may include a globally unique identifier of the security policy.

In a specific implementation manner of this implementation, the first computer calculates the index information of the security policy according to a preset rule and the metadata of the container image. Correspondingly, the second computer calculates the index information of the security policy according to the preset rule and the metadata of the container image.

In this implementation, the fixed association relationship between the container image and the security policy may be included with no need to modify the container image.

According to a second aspect, this application provides a computer. The computer has a function of implementing a behavior of the first computer or a behavior of the second computer in the foregoing method. The function may be implemented by hardware, or may be implemented by hardware executing corresponding software. The hardware or the software includes one or more modules corresponding to the foregoing function.

For example, the computer may include a processor, a memory, a receiver, and a transmitter. The memory stores a related instruction. The receiver and the transmitter are configured to support the computer in communication with a container repository. The processor executes the instruction in the memory, to complete the processing steps in the foregoing method.

In a possible design, the memory is coupled to the processor.

In a possible design, the receiver is coupled to the transmitter.

According to a third aspect, this application provides a processing system for a container security policy. The processing system includes a first computer, a second computer, and a container repository. The first computer is configured to perform the steps or operations performed by the first computer in the first aspect, the second computer is configured to perform the steps or operations performed by the second computer in the first aspect, and the container repository is configured to store a container image, or store a container image and a security policy.

According to a fourth aspect, this application provides a computer-readable storage medium. The computer-readable storage medium stores program code used to be executed by a computer. The program code includes an instruction used to perform the processing method for a container security policy in any possible implementation of the first aspect.

According to a fifth aspect, this application provides a computer program product including an instruction. When the computer program product is run on a computer, the computer is enabled to perform the processing method for a container security policy in any possible implementation of the first aspect.

According to a sixth aspect, this application provides a system chip. The system chip includes an input/output interface, at least one processor, at least one memory, and a bus. The at least one memory is configured to store an instruction, and the at least one processor is configured to invoke the instruction in the at least one memory, to perform the operations of the processing method for a container security policy in any possible implementation of the first aspect.

According to a seventh aspect, this application provides a data structure. This data structure is used to store a container image and related data of the container image. The container image stores a security policy or stores index information of a security policy by using any possible implementation of the first aspect.

### BRIEF DESCRIPTION OF DRAWINGS

FIG. 1 is a schematic diagram of an architecture of a processing system for a container security policy to which an embodiment of this application is applied;
FIG. 2 is a schematic diagram of a relationship between a container and a host machine;
FIG. 3 is a schematic flowchart of a processing method for a container security policy according to an embodiment of this application;
FIG. 4 is a schematic flowchart of a processing method for a container security policy according to another embodiment of this application;
FIG. 5 is a schematic flowchart of a processing method for a container security policy according to another embodiment of this application;
FIG. 6 is a schematic structural diagram of a computer according to an embodiment of this application;
FIG. 7 is a schematic structural diagram of a computer according to another embodiment of this application;
FIG. 8 is a schematic structural diagram of a computer according to another embodiment of this application;
FIG. 9 is a schematic structural diagram of a computer according to another embodiment of this application; and
FIG. 10 is a schematic structural diagram of a processing system for a container security policy according to an embodiment of this application.

### DESCRIPTION OF EMBODIMENTS

The following describes technical solutions of this application with reference to accompanying drawings.

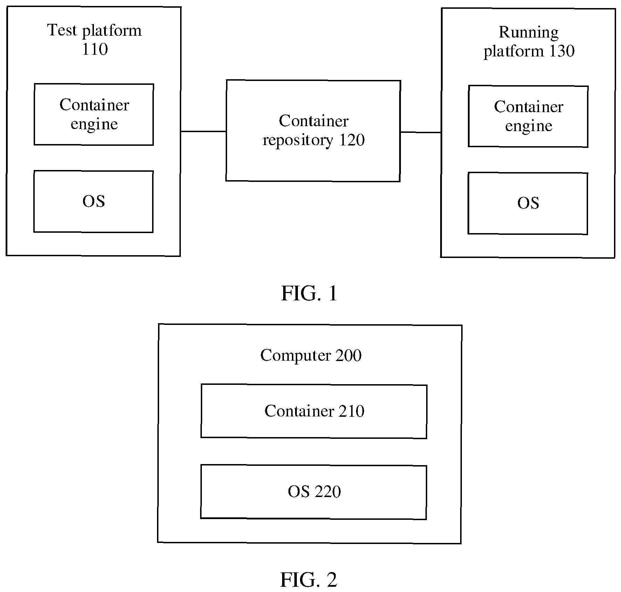

FIG. 1 is a schematic diagram of an architecture of a processing system for a container security policy to which an embodiment of this application is applied. The processing system shown in FIG. 1 may include a test platform 110, a container repository 120, and a running platform 130.

The test platform 110 and the running platform 130 each may include one or more computers. The computer may also be referred to as a host. For example, the computer may include a server, a workstation, a personal computer, a mobile phone, a tablet computer, and a virtual machine.

A computer included in the test platform 110 may be the same as or different from a computer included in the running platform 130. For ease of description, the computer in the test platform 110 may be referred to as a first computer, and the computer in the running platform 130 may be referred to as a second computer.

A computer operating system (operating system, OS) may be deployed on a computer. For example, the computer OS may be Linux, Unix, a Windows operating system, Mach OS, Android, or iOS.

In the computer OS, one process or a group of processes may be isolated to form a runtime environment. Scheduling and resource control may be performed on the runtime environment as a whole by the OS, and the runtime environment may be referred to as a container. A computer may include one or more containers.

As shown in FIG. 2, a computer 200 is a carrier of a container 210, and is a basic environment in which the container 210 runs. The container 210 may share a resource on the computer 200 with an OS 220 of the computer. For example, the container 210 and the OS 220 may share a kernel. Therefore, the computer 200 on which the container 210 is located may also be referred to as a host machine of the container 210.

A set of program code or instructions that can be run in a container and can implement a specific function is an image. The image may also be referred to as a container image.

The container image may contain a file system and metadata (metadata). The file system may also be referred to as a root file system or rootFS. The metadata may include control data and configuration data.

An instance generated when a container image is run in a container may be referred to as a container process.

The computer OS may further include one process or a group of processes. The process may implement one or more of the following functions: downloading, local storing, querying, loading, running of the container image, and life cycle management of the container process. The process may be referred to as a container engine.

A container repository 120 is an entity configured to centrally store and manage container images. The container repository may also be referred to as a container server. Generally, on a distributed platform, the container repository may be an independent server. Optionally, in some implementations, the container repository may also be integrated into one or more computers or one or more management nodes on the distributed platform in a form of a software database.

Both the test platform 110 and the running platform 130 can communicate with the container repository 120. For example, the test platform 110 may publish the container image to the container repository 120. The running platform 130 may obtain the container image or other information from the container repository.

It should be understood that the embodiments of this application are not limited to the system architecture shown in FIG. 1. For example, the processing system for a container security policy to which this embodiment of this application is applied may not include the test platform 110.

In addition, a device or module in FIG. 1 may be hardware, or may be software obtained through function division, or a combination of the hardware and the software.

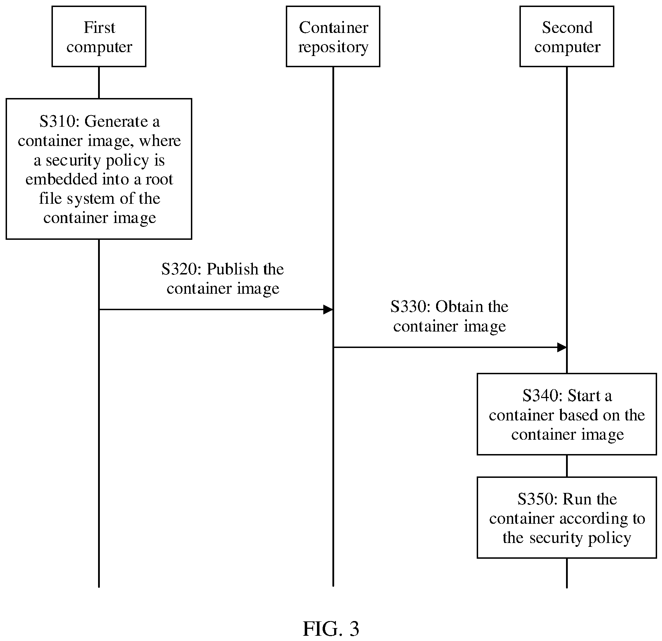

Using the processing system shown in FIG. 1 as an example, the following describes a processing method for a container security policy according to the embodiments of this application with reference to FIG. 3 to FIG. 5.

FIG. 3 is a schematic flowchart of a processing method for a container security policy according to an embodiment of this application. It should be understood that FIG. 3 shows steps or operations of the processing method. However, these steps or operations are merely examples, and other operations or variations of the operations in FIG. 3 may also be performed in this embodiment of this application.

S310: A first computer embeds a security policy into a root file system of an original container image, to obtain a container image.

The security policy is a set of rules that restrict a behavior or behaviors of one process or a group of processes. In this embodiment of this application, the security policy may be specifically a set of rules that restrict a behavior of a container.

It should be understood that, in this embodiment of this application, the original container image is a container image that contains no security policy or is not associated with a security policy.

The security policy is embedded into the root file system of the original container image, so that there is a fixed association relationship between the security policy and the original container image. Therefore, the security policy corresponding to the container can be forcibly implemented when a container corresponding to the original container image is started. This can ensure container security and consistency between container process behaviors.

That the security policy is forcibly implemented herein may mean that the security policy is not affected by a container process or a user selection, but is defined and uniformly implemented for all specific original container images.

In other words, after an original container image is loaded on any computer, a container corresponding to the original container image corresponds to a same security policy.

In addition, compared with that the security policy is included in metadata of the container image, in the implementation in which the security policy is embedded into the root file system of the original container image, a definition of the metadata does not need to be modified. This can ensure compatibility between the container image and the standard.

Optionally, the security policy may be a security policy generated based on a behavior of a container after a container engine on the first computer runs, in the container, the original container image. For ease of description, the container engine on the first computer is referred to as a test container engine.

Specifically, the test container engine loads, in the container, a root file system of the container image, and starts the container. An OS of the first computer then collects the behavior of the container. Because an entire test platform and the original container image are considered secure, the behavior of the container that is collected by the OS on the first computer may be considered as a proper behavior of the container. Therefore, the behavior may be used as reference for a behavior generated during running of a corresponding container after the original container image is loaded on another computer (for example, a computer on the running platform 130).

In other words, the security policy of the original container image may be generated based on the behavior of the container that is collected by the OS of the first computer. Alternatively, the security policy of the container corresponding to the original container image may be generated based on the behavior of the container that is collected by the OS of the first computer.

The first computer may embed the security policy into the root file system of the original container image in the following manners: The first computer determines a path in which the security policy is recorded in a file, and writes the security policy to the file in the path. Only the security policy may be recorded in the file.

S320: The first computer publishes the container image to a container repository.

It should be understood that the publishing herein may be publishing directly from the first computer to the container repository, or may be publishing to the container repository by using another device.

Correspondingly, the container repository receives the container image published by the first computer.

When publishing the container image to the container repository, the first computer may send an identifier of the container image to the container repository. After receiving the container image, the container repository stores the container image, and records a mapping relationship between the identifier of the container image and a storage address of the container image in the container repository.

The container repository may also manage the container image, specifically including operations such as querying, updating, or deleting the container image.

S330: A second computer obtains the container image from the container repository, where the root file system of the container image includes the security policy.

For example, the second computer may send the identifier of the container image (for ease of description, the container image is referred to as a target container image) to the container repository. The container repository determines a storage address of the target container image based on the identifier and the mapping relationship between the container image and a container image storage address. Then, the container repository reads the container image stored in the storage address and sends the container image to the second computer.

S340: The second computer starts the container based on the container image.

That the second computer starts the container based on the container image may include: The second computer analyzes an identifier of metadata and/or various configuration information in the container image, configures various attributes of the container based on the configuration information, loads the root file system in the container image, and the like.

These steps may be specifically performed by the container engine.

The container engine may record the path in which the security policy is recorded in the file. Therefore, the container engine may read the security policy from the file in the path.

S350: The second computer runs the container according to the security policy.

For example, during running of the container, the second computer compares each behavior of the container with a behavior recorded in the security policy. If the behavior of the container is inconsistent with the behavior recorded in the security policy, an OS on the second computer may reject a system service request corresponding to the behavior of the container. This can ensure container security.

In the processing method, because the root file system of the container image includes the security policy, to be specific, a fixed association relationship has been established between the container image and the security policy, and the security policy is generated based on a behavior of the container image, the corresponding security policy can be forcibly implemented when the container is started. This can ensure container security and consistency between container process behaviors.

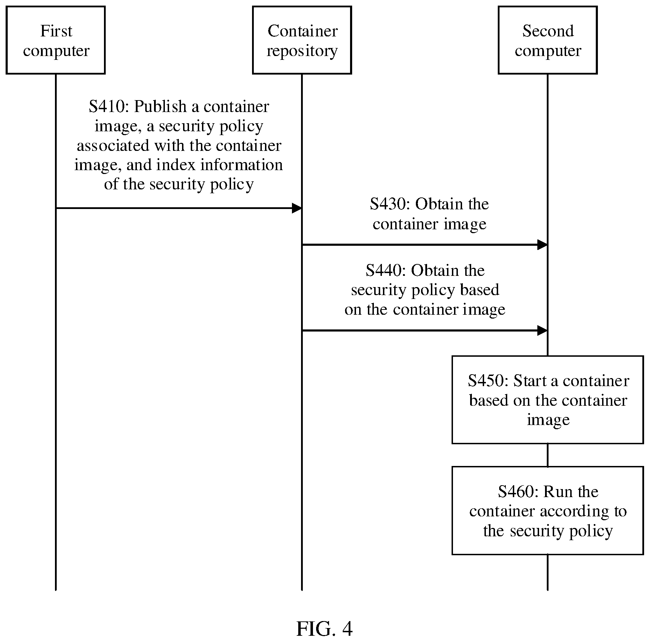

FIG. 4 is a schematic flowchart of a processing method for a container security policy according to another embodiment of this application. It should be understood that FIG. 4 shows steps or operations of the processing method. However, these steps or operations are merely examples, and other operations or variations of the operations in FIG. 4 may also be performed in this embodiment of this application.

S410. A first computer publishes a container image, a security policy associated with the container image, and index information of the security policy.

The security policy is a set of rules that restrict a behavior or behaviors of one process or a group of processes. In this embodiment of this application, the security policy may be specifically a set of rules that restrict a behavior of a container.

It should be understood that, in this embodiment of this application, an original container image is a container image that contains no security policy or is not associated with a security policy.

The index information of the security policy may be a unique identifier used to identify the security policy.

In an implementation, before S410 is performed, the first computer may determine the index information of the security policy, embed the index information of the security policy into the original container image, to obtain the container image, and send the container image, the identifier of the container image, the security policy, and the index information of the security policy to a container repository.

For example, the first computer uses a globally unique identifier (globally unique Identifier, GUID) of the security policy as the index information of the security policy, and embeds the index information into the original container image.

In another implementation, before S410 is performed, the first computer may calculate the index information of the security policy according to a preconfigured rule and metadata of the original container image, and send the original container image (which may also be referred to as the container image), an identifier of the original container image, the security policy, and the index information of the security policy to the container repository.

For example, a digest (for example, SHA-256) of the entire original container image may be calculated, to obtain information that can uniquely identify the original container image. The information may be used as the index information of the security policy.

For another example, a digest (for example, SHA-256) of a manifest file in the original container image may be calculated, to obtain information that can be used to uniquely identify the original container image. The information may be used as the index information of the security policy. The manifest file here is not a part of a root file system, but is a file that has to be included according to a standard and that is used to describe metadata of a container image.

For another example, the metadata of the original container image may include a digest (hash) of an image file system and a digest of a container configuration. These digests may be used to uniquely identify the original container image, and also be used as the index information of the security policy.

The index information of the security policy corresponding to the container image is associated with the container image, so that a fixed association relationship can be established between the container image and the security policy. Therefore, the corresponding security policy can be forcibly implemented when the container is started, so that container security and consistency between container process behaviors can be ensured.

Optionally, that the first computer embeds the index information of the security policy into the original container image may include: The first computer embeds the index information of the security policy into the root file system or the metadata of the original container image.

For a manner of obtaining the security policy, refer to the manner of obtaining the security policy in S310. Details are not described herein.

The index information of the security policy is embedded into the root file system of the original container image, so that the security policy can be bound to the container image, and the security policy can be maintained in the container repository with no need to re-publish an image.

The first computer may embed the index information of the security policy into the root file system of the original container image in the following manners: The first computer determines a path in which the index information is recorded in a file, and writes the index information to the file in the path.

The first computer may embed the index information of the security policy into the metadata of the original container image in the following manners: The first computer determines a keyword that is pre-allocated to the index information and a configuration file that is pre-specified in the metadata and that can store the index information, and write the index information to a location that is in the configuration file and that corresponds to the keyword.

The container repository receives the container image, the identifier of the container image, the security policy, and the index information of the security policy from the first computer. After storing the container image and the security policy, the container repository may generate a mapping relationship between the identifier of the container image and a storage address of the container image, and generate a mapping relationship between the index information of the security policy and the storage address of the security policy.

The container repository may also manage the container image and the corresponding security policy, specifically including operations such as querying, updating, or deleting the container image.

S430: A second computer obtains the container image from the container repository.

For this step, refer to S330. Details are not described herein.

S440: The second computer obtains the security policy from the container repository based on the container image.

In an implementation, the second computer directly obtains the index information of the security policy from the container image.

For example, the second computer may directly obtain the index information of the security policy from the root file system or the metadata of the container image. For example, when the index information of the security policy is the GUID of the security policy, the second computer may obtain the GUID of the security policy from the root file system or the metadata of the container image.

When obtaining the index information from the root file system, the second computer may obtain, based on the pre-specified path, the file in which the index information is recorded, and read the index information from the file.

When obtaining the index information from the metadata, the second computer may read the index information from the pre-specified configuration file in the metadata based on the pre-specified keyword.

In an implementation, the second computer may calculate the index information of the security policy according to the pre-configured rule and the metadata in the container image. For this operation, refer to the related operation in S410.

After obtaining the index information of the security policy, the second computer may send the index information (for ease of description, referred to as target index information) to the container repository. The container repository may determine, based on the target index information and the mapping relationship between the index information of the security policy and the storage address of the security policy, a target storage address corresponding to the target index information, and return, to the second computer, a security policy in the target storage address.

S450: The second computer starts the container based on the container image.

For S450, refer to S340. Details are not described herein.

S460: The second computer runs the container according to the security policy.

For S460, refer to S350. Details are not described herein.

In the processing method, the index information of the security policy associated with the container can be determined based on information of the container image, to be specific, a fixed association relationship has been established between the container image and the security policy, and the security policy is determined based on a behavior of the container image, so that the corresponding security policy can be forcibly implemented when the container is started. This can ensure container security and consistency between container process behaviors.

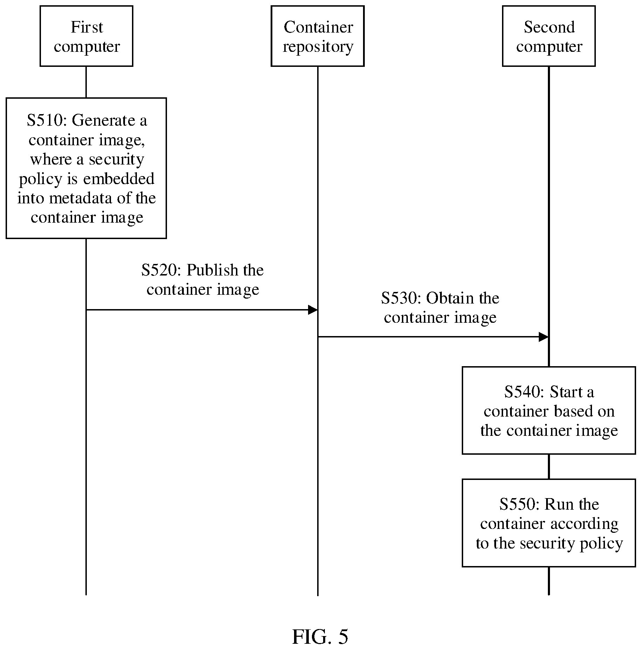

FIG. 5 is a schematic flowchart of a processing method for a container security policy according to another embodiment of this application. It should be understood that FIG. 5 shows steps or operations of the processing method. However, these steps or operations are merely examples, and other operations or variations of the operations in FIG. 5 may also be performed in this embodiment of this application.

S510: A first computer embeds a security policy into metadata of an original container image, to obtain a container image.

For related definitions of the security policy and the original container image, refer to the related content in S310. Details are not described herein.

The first computer may embed the security policy into the metadata of the original container image in the following manner: The first computer records the security policy to a pre-specified configuration file in the metadata based on a keyword that is pre-allocated to the security policy.

S520: The first computer publishes the container image to a container repository.

For this step, refer to S320. Details are not described herein.

S530: A second computer obtains the container image from the container repository.

For this step, refer to S330. Details are not described herein.

S540: The second computer starts the container based on the container image.

For this step, refer to S340. Details are not described herein.

A difference between S540 and S340 lies in that the second computer obtains the security policy in a different manner. In S540, the second computer may read the security policy from the specified configuration file in the metadata based on the keyword that is pre-allocated to the security policy.

S550: The second computer runs the container according to the security policy.

For S550, refer to S350. Details are not described herein.

In the processing method, because the metadata of the container image includes the security policy, to be specific, a fixed association relationship has been established between the container image and the security policy, and the security policy is determined based on a behavior of the container image, the corresponding security policy can be forcibly implemented when the container is started. This can ensure container security and container process behavior consistency.

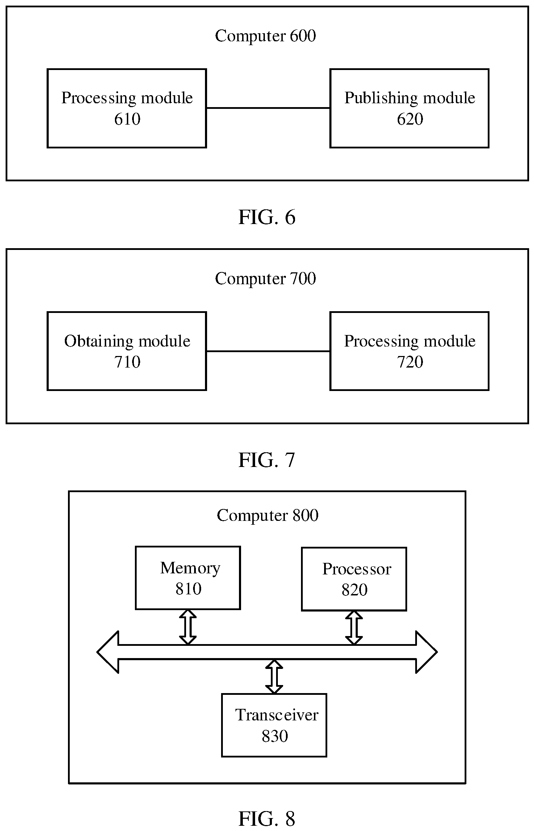

FIG. 6 is a schematic structural diagram of a computer 600 according to an embodiment of this application. It should be understood that the computer 600 shown in FIG. 6 is merely an example. The computer in this embodiment of this application may further include another module or unit, or include a module having a function similar to that of the module in FIG. 6, or may not necessarily include all modules in FIG. 6.

The computer 600 may include a processing module 610 and a publishing module 620.

The computer 600 may be configured to perform the operations or steps implemented by the first computer in the processing method shown in FIG. 3. For example, the processing module 610 may be configured to perform S310, and the publishing module 620 may be configured to perform S320.

Alternatively, the computer 600 may be configured to perform the operations or steps implemented by the first computer in the processing method shown in FIG. 4. For example, the publishing module 620 may be configured to perform S410.

Alternatively, the computer 600 may be configured to perform the operations or steps implemented by the first computer in the processing method shown in FIG. 5. For example, the processing module 610 may be configured to perform S510, and the publishing module 620 may be configured to perform S520.

FIG. 7 is a schematic structural diagram of a computer 700 according to another embodiment of this application. It should be understood that the computer 700 shown in FIG. 7 is merely an example. The computer in this embodiment of this application may further include another module or unit, or include a module having a function similar to that of the module in FIG. 7, or may not necessarily include all modules in FIG. 7.

The computer 700 may include an obtaining module 710 and a processing module 720.

The computer 700 may be configured to perform the operations or steps implemented by the second computer in the processing method shown in FIG. 3. Specifically, the obtaining module 710 may be configured to perform S330, and the processing module 720 may be configured to perform S340 and S350.

Alternatively, the computer 700 may be configured to perform the operations or steps implemented by the second computer in the processing method shown in FIG. 4. Specifically, the obtaining module 710 may be configured to perform S430 and S440, and the processing module 720 may be configured to perform S450 and S460.

Alternatively, the computer 700 may be configured to perform the operations or steps implemented by the second computer in the processing method shown in FIG. 5. Specifically, the obtaining module 710 may be configured to perform S530, and the processing module 720 may be configured to perform S540 and S550.

FIG. 8 is a schematic structural diagram of a computer 800 according to another embodiment of this application. It should be understood that the computer 800 shown in FIG. 8 is merely an example. The computer in this embodiment of this application may further include another module or unit, or include a module having a function similar to that of the module in FIG. 8, or may not necessarily include all modules in FIG. 8.

The computer 800 may include a processor 820 and a transceiver 830. Optionally, the computer 800 may further include a memory 810. The memory 810 may be integrated into the processor 820.

The memory 810 is configured to store a program and related data that are executed by the processor 820. The processor 820 may be configured to implement a function of S610. The transceiver 830 may be configured to implement a function of S620.

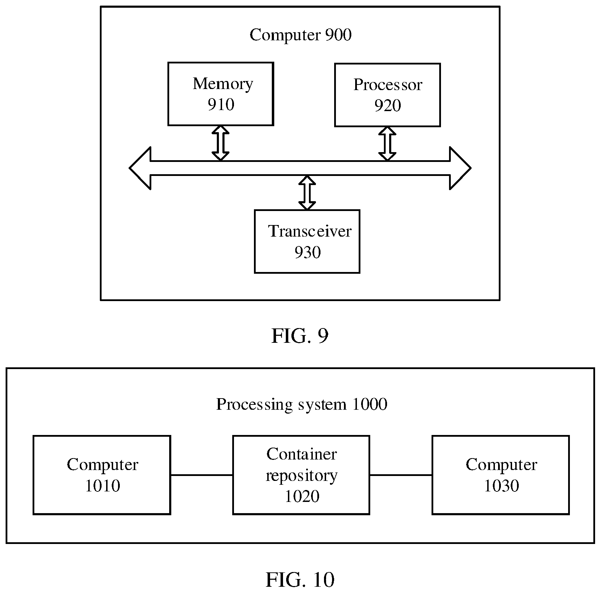

FIG. 9 is a schematic structural diagram of a computer 900 according to another embodiment of this application. It should be understood that the computer 900 shown in FIG. 9 is merely an example. The computer in this embodiment of this application may further include another module or unit, or include a module having a function similar to that of the module in FIG. 9, or may not necessarily include all modules in FIG. 9.

The computer 900 may include a processor 920 and a transceiver 930. Optionally, the computer 900 may further include a memory 910. The memory 910 may be integrated into the processor 920.

The memory 910 is configured to store a program and related data that are executed by the processor 920. The processor 920 may be configured to implement a function of S720. The transceiver 930 may be configured to implement a function of S710.

FIG. 10 is a schematic structural diagram of a processing system 1000 for a container security policy according to an embodiment of this application. It should be understood that a structure shown in FIG. 10 is merely an example. The processing system 1000 in this embodiment of this application may further include another module or unit, or include a module having a function similar to that of the module in FIG. 10, or may not necessarily include all modules in FIG. 10.

The processing system 1000 includes a computer 1010, a container repository 1020, and a computer 1030.

The computer 1010 may be the computer 600 or the computer 800, and the computer 1030 may be the computer 700 or the computer 900.

The container repository 1020 may be configured to: receive a container image from the computer 1010, generate a mapping relationship between the container image and a storage address, receive an identifier of the container image from the computer 1030, read the container image based on the identifier and the mapping relationship, and send the container image to the computer 1030.

Alternatively, the container repository 1020 may be configured to: receive a container image, a security policy, and index information of the security policy from the computer 1010, generate a first mapping relationship between the container image and a storage address, generate a second mapping relationship between the index information of the security policy and the storage address, receive an identifier of the container image from the computer 1030, read the container image based on the identifier and the first mapping relationship, send the container image to the computer 1030, receive the index information of the security policy from the computer 1030, read the security policy based on the index information and the second mapping relationship, and send the security policy to the computer 1030.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A processing method for a container security policy, comprising:
obtaining a container image;
determining index information of a security policy based on the container image;
obtaining the security policy based on the index information;
starting a container based on the container image; and
running the container according to the security policy.

2. The processing method according to claim 1, wherein the container image comprises the index information.

3. The processing method according to claim 2, wherein the index information comprises a globally unique identifier of the security policy.

4. The processing method according to claim 1, wherein the determining index information of a security policy based on the container image comprises:
calculating the index information according to a preset rule and metadata of the container image.

5. A processing method for a container security policy, comprising:
Embedding index information of a security policy into an original container image, to obtain a container image; and
publishing the container image, the security policy, and the index information to a container repository.

6. The processing method according to claim 5, wherein the index information comprises a globally unique identifier of the security policy.

7. A processing method for a container security policy, comprising:
calculating index information of a security policy according to a preset rule and metadata of a container image;
publishing the container image, the security policy, and the index information of the security policy to the container repository.

8. A processing method for a container security policy, comprising:
obtaining a container image, wherein a root file system of the container image comprises a security policy;
starting a container based on the container image; and
running the container according to the security policy.

9. A processing method for a container security policy, comprising:
embedding a security policy into a root file system of an original container image, to obtain a container image; and
publishing the container image to a container repository.

10. A computer, comprising:
an obtaining module, configured to obtain a container image; and
a processing module, configured to determine index information of a security policy based on the container image, wherein
the processing module is further configured to obtain the security policy based on the index information,
the processing module is further configured to start a container based on the container image, and
the processing module is further configured to run the container according to the security policy.

11. The computer according to claim 10, wherein the container image comprises the index information.

12. The computer according to claim 11, wherein the index information comprises a globally unique identifier of the security policy.

13. The computer according to claim 10, wherein the processing module is specifically configured to calculate the index information according to a preset rule and metadata of the container image.

14. A computer, comprising:
a processing module, configured to embed index information of a security policy into an original container image, to obtain a container image; and
a publishing module, configured to publish the container image, the security policy, and the index information to the container repository.

15. The computer according to claim 14, wherein the index information comprises a globally unique identifier of the security policy.

16. A computer, comprising:
a processing module, configured to calculate index information of a security policy according to a preset rule and metadata of a container image; and
a publishing module, configured to publish the container image, the security policy, and the index information of the security policy to the container repository.

17. A computer, comprising:
an obtaining module, configured to obtain a container image, wherein a root file system of the container image comprises a security policy; and
a processing module, configured to start a container based on the container image, wherein
the processing module is further configured to run the container according to the security policy.

18. A computer, comprising:
a processing module, configured to embed a security policy into a root file system of an original container image, to obtain a container image; and
a publishing module, configured to publish the container image to a container repository.

19. A processing system for a container security policy, comprising the computer according to any one of claims 10 to 13, the computer according to any one of claims 14 to 16, and a container repository.

20. A processing system for a container security policy, comprising the computer according to claim 17, the computer according to claim 18, and a container repository.

21. A computer-readable storage medium, wherein the computer-readable storage medium stores program code executed by a computer, and the program code comprises an instruction used to perform the processing method for a container security policy according to any one of claims 1 to 9.
